# EUROPÄISCHE PATENTANMELDUNG

(11) **EP 2 386 404 A1**
(43) Veröffentlichungstag der Anmeldung: **16.11.2011**
(21) Anmeldenummer: 10004978.2
(22) Anmeldetag: 11.05.2010
(51) Int. Cl.: B29C 67/00, B22F 3/105

(54) **Vorrichtung zur Herstellung von Werkstücken durch Beaufschlagen von Pulverschichten mit elektromagnetischer Strahlung oder Teilchenstrahlung**

(71) Anmelder: SLM Solutions GmbH, 23556 Lübeck (DE)
(72) Erfinder: Schöneborn, Henner, Dipl.-Ing., 23556 Lübeck (DE); Wiesner, Andreas, 23628 Lübeck-Krummesse (DE)
(74) Vertreter: Schicker, Silvia

(57) **Zusammenfassung**

Eine Vorrichtung (10) zur Herstellung von Werkstücken durch Beaufschlagen von Pulverschichten mit elektromagnetischer Strahlung oder Teilchenstrahlung umfasst ein Prozessraumgehäuse (12) sowie eine in dem Prozessraumgehäuse (12) angeordnete Pulverauftragvorrichtung (14) zum Auftragen von mit elektromagnetischer Strahlung oder Teilchenstrahlung zu beaufschlagendem Rohstoffpulver auf einen Träger (16). Die Pulverauftragvorrichtung umfasst eine Pulverkammer (18) sowie eine Pulverauslassöffnung (20). Eine Motor/Getriebeanordnung (28) ist dazu eingerichtet, die Pulveraufragvorrichtung (14) relativ zu dem Träger (16) zu bewegen. Ein Motor (30) der Motor/Getriebeanordnung (28) ist außerhalb des Prozessraumgehäuses (12) angeordnet.

## Beschreibung

Die vorliegende Erfindung betrifft eine Vorrichtung zur Herstellung von dreidimensionalen Werkstücken durch Beaufschlagen von Pulverschichten mit elektromagnetischer Strahlung oder Teilchenstrahlung, insbesondere eine Laserschmelz- oder Lasersintervorrichtung.

Das selektive Laserschmelzen oder Lasersintern ist ein generatives Schichtbauverfahren, durch das pulverförmige, insbesondere metallische und/oder keramische Rohstoffe zu komplex geformten dreidimensionalen Werkstücken verarbeitet werden können. Hierzu wird eine Rohstoffpulverschicht auf einen Träger aufgebracht und in Abhängigkeit der gewünschten Geometrie des zu erstellenden Werkstücks ortselektiv mit Laserstrahlung beaufschlagt. Die in die Pulverschicht eindringende Laserstrahlung bewirkt eine Erwärmung und folglich eine Verschmelzung oder Versinterung der Rohstoffpulverpartikel. Anschließend werden sukzessiv weitere Rohstoffpulverschichten auf die bereits laserbehandelte Schicht auf dem Träger aufgebracht bis das Werkstück die gewünschte Form und Größe hat. Selektives Laserschmelzen oder Lasersintern kann insbesondere zur Herstellung von Prototypen, Werkzeugen, Ersatzteilen oder medizinischen Prothesen, wie zum Beispiel zahnärztlichen oder orthopädischen Prothesen anhand von CAD-Daten eingesetzt werden.

Eine aus der EP 1 793 979 A1 bekannte Anlage zur Herstellung von Formkörpern aus pulverförmigen Rohstoffen durch selektives Laserschmelzen umfasst einen Prozessraum, in dem eine Mehrzahl von Trägern für die herzustellenden Formkörper angeordnet ist. Eine Pulverschicht-Präparierungseinrichtung umfasst einen Pulverreservoirhalter, in dem mehrere, den einzelnen Trägern zugeordnet Einstecköffnungen ausgebildet sind. Die Einstecköffnungen nehmen als Pulverreservoirs dienende Wechselbehälter auf. Im Betrieb der Anlage wird der Pulverreservoirhalter durch einen in dem Prozessraum angeordneten Spindeltriebs über die Träger hin- und herbewegt, wobei Pulver aus den Wechselbehältern auf die Träger aufgebracht wird. Die auf die Träger aufgebrachte Pulverschicht wird schließlich selektiv mit Laserstrahlung beaufschlagt.

Die Erfindung ist auf die Aufgabe gerichtet, eine auch mit hohen Prozessraumtemperaturen zuverlässig betreibbare Vorrichtung zur Herstellung von dreidimensionalen Werkstücken durch Beaufschlagen von Pulverschichten mit elektromagnetischer Strahlung oder Teilchenstrahlung, insbesondere eine Laserschmelz- oder Lasersintervorrichtung bereitzustellen.

Diese Aufgabe wird durch eine Vorrichtung mit den Merkmalen des Anspruchs 1 gelöst.

Eine erfindungsgemäße Vorrichtung zur Herstellung von Werkstücken durch Beaufschlagen von Pulverschichten mit elektromagnetischer Strahlung oder Teilchenstrahlung umfasst ein Prozessraumgehäuse sowie eine in dem Prozessraumgehäuse angeordnete Pulverauftragvorrichtung zum Auftragen von mit elektromagnetischer Strahlung oder Teilchenstrahlung zu beaufschlagendem Rohstoffpulver auf einen Träger. Das Prozessraumgehäuse ist vorzugsweise gegenüber der Außenatmosphäre abgedichtet, so dass im Inneren des Prozessraumgehäuses bei Bedarf eine Schutzgasatmosphäre erzeugt und aufrecht erhalten werden kann. Das Prozessraumgehäuse kann über entsprechende Leitungen mit einer geeigneten Schutzgaserzeugungsanlage verbunden sein.

Das von der Pulverauftragvorrichtung auf den Träger aufzubringende Rohstoffpulver kann ein Kunststoffpulver, ein keramisches Pulver, ein metallisches Pulver und/oder ein beliebiges anderes Pulver mit einer beliebigen geeigneten Korngröße bzw. Korngrößenverteilung sein. Vorzugsweise werden Pulver mit Korngrößen < 200 µm verarbeitet. Die Pulverauftragvorrichtung umfasst mindestens eine Pulverkammer, die dazu dient, über eine Pulverzufuhröffnung in die Pulverauftragvorrichtung zugeführtes und auf den Träger der Vorrichtung zur Herstellung von Werkstücken durch Beaufschlagen von Pulverschichten mit elektromagnetischer Strahlung oder Teilchenstrahlung aufzubringendes Rohstoffpulver aufzunehmen. Die Pulverkammer kann so dimensioniert sein, dass sie das gesamte zur Herstellung eines Werkstücks benötigte Rohstoffpulver aufnehmen kann. Alternativ dazu kann die Pulverkammer jedoch auch kleiner ausgeführt und die Pulverzufuhröffnung mit einer entsprechenden Pulvernachführvorrichtung zur Nachführung von Pulver in die Pulverkammer der Pulverauftragvorrichtung verbunden sein. Die Pulvernachführung kann kontinuierlich oder diskontinuierlich erfolgen.

Bei Bedarf kann die Pulverauftragvorrichtung auch zwei oder mehr voneinander getrennte Pulverkammern umfassen, die mit gleichen oder unterschiedlichen Pulvern gefüllt werden können. Vorzugsweise ist dann jede Pulverkammer mit einer Pulverauslassöffnung zur Abgabe von Rohstoffpulver aus der Pulverkammer auf den Träger der Anlage zur Herstellung von Werkstücken durch Beaufschlagen von Pulverschichten mit elektromagnetischer Strahlung oder Teilchenstrahlung versehen.

Der Träger zur Aufnahme des mit elektromagnetischer Strahlung oder Teilchenstrahlung zu beaufschlagenden Rohstoffpulvers ist vorzugsweise plattenförmig ausgebildet. Grundsätzlich kann der Träger ein starr fixierter Träger sein. Vorzugsweise ist der Träger jedoch in vertikaler Richtung verschiebbar ausgebildet, so dass der Träger mit zunehmender Bauhöhe des schichtweise aufgebauten Werkstücks in vertikaler Richtung nach unten bewegt werden kann.

Eine Motor/Getriebeanordnung der erfindungsgemäßen Vorrichtung zur Herstellung von Werkstücken durch Beaufschlagen von Pulverschichten mit elektromagnetischer Strahlung oder Teilchenstrahlung ist dazu eingerichtet, die Pulverauftragvorrichtung relativ zu dem Träger zu bewegen. Vorzugsweise ist die Motor/Getriebeanordnung dazu eingerichtet, die Pulverauftragvorrichtung derart über den Träger, d.h. in einer Richtung parallel zu einer Pulveraufnahmeoberfläche des Trägers zu bewegen, dass auf dem Träger durch aus der Pulverauslassöffnung der Pulverauftragvorrichtung aus der Pulverkammer der Pulverauftragvorrichtung austretendes Pulver eine Rohstoffpulverschicht mit einer gewünschten Dicke erzeugt wird. Die Dicke der auf dem Träger erzeugten Rohstoffpulverschicht kann durch den Auslassquerschnitt der Pulverauslassöffnung der Pulverauftragvorrichtung sowie die Bewegungsgeschwindigkeit der Pulverauftragvorrichtung relativ zu dem Träger wie gewünscht gesteuert werden.

Die auf dem Träger erzeugten Pulverschichten können durch eine geeignete Bestrahlungseinrichtung selektiv mit elektromagnetischer Strahlung oder Teilchenstrahlung, insbesondere Laserstrahlung beaufschlagt werden. Die Bestrahlungseinrichtung umfasst vorzugsweise einen fokussierten Laser. Ein Strahl der Bestrahlungseinrichtung wird über die auf den Träger aufgebrachte Rohstoffpulverschicht geführt, so dass die auf den Träger aufgebrachte Rohstoffpulverschicht ortselektiv mit elektromagnetischer Strahlung oder Teilchenstrahlung beaufschlagt wird. Der durch die Beaufschlagung mit elektromagnetischer Strahlung oder Teilchenstrahlung verursachte Wärmeeintrag in die Rohstoffpulverschicht bewirkt, dass die einzelnen Partikel des Rohstoffpulvers in der Rohstoffpulverschicht miteinander verschmelzen bzw. versintern und dadurch ein schichtweiser Werkstückaufbau erfolgt.

Bei der erfindungsgemäßen Vorrichtung zur Herstellung von Werkstücken durch Beaufschlagen von Pulverschichten mit elektromagnetischer Strahlung oder Teilchenstrahlung ist ein Motor der Motor/Getriebeanordnung außerhalb des Prozessraumgehäuses angeordnet. Insbesondere sind alle temperaturempfindlichen Komponenten, wie z.B. elektrische und/oder elektronische Komponenten sowie aus nicht temperaturresistenten Materialien bestehenden Komponenten der Motor/Getriebeanordnung außerhalb des Prozessraumgehäuses angeordnet. Die Materialien aller innerhalb des Prozessraumgehäuses angeordneten Komponenten der Motor/Getriebeanordnung können dagegen an die im Betrieb der erfindungsgemäßen Vorrichtung zur Herstellung von Werkstücken durch Beaufschlagen von Pulverschichten mit elektromagnetischer Strahlung oder Teilchenstrahlung im Inneren des Prozessraumgehäuses vorherrschenden Temperaturen angepasst werden. Bei einer derartigen Konfiguration kann auch dann eine ordnungsgemäße Funktion der Motor/Getriebeanordnung gewährleistet werden, wenn im Inneren des Prozessraumgehäuses hohe Temperaturen von beispielsweise 500°C oder mehr vorherrschen. Ferner ist der Motor durch Verschmutzung durch Pulver geschützt. Beispielsweise kann der Motor der Motor/Getriebeanordnung außerhalb des Prozessraumgehäuses in einem Motorgehäuse aufgenommen sein.

Die erfindungsgemäße Vorrichtung kann in besonders vorteilhafter Weise zur Verarbeitung von Rohstoffpulvern eingesetzt werden, bei deren Beaufschlagung mit elektromagnetischer Strahlung oder Teilchenstrahlung im Inneren des Prozessraumgehäuses hohe Temperaturen entstehen. Ferner kann die Bestrahlungsintensität der Rohstoffpulverschichten erhöht werden, ohne dass Funktionseinbußen der Motor/Getriebeanordnung zu befürchten sind. Die erfindungsgemäße Vorrichtung zur Herstellung von Werkstücken durch Beaufschlagen von Pulverschichten mit elektromagnetischer Strahlung oder Teilchenstrahlung ist daher besonders flexibel einsetzbar.

Die Pulverauftragvorrichtung kann eine Fördereinrichtung zur Förderung von in der Pulverkammer aufgenommenem Rohstoffpulver in Richtung der Pulverauslassöffnung umfassen. Die Fördereinrichtung ist vorzugsweise so gestaltet, dass sie eine Dosierung des über die Pulverauslassöffnung aus der Pulverkammer abgegebenen Rohstoffpulvers ermöglicht. Insbesondere kann die Fördereinrichtung dazu eingerichtet sein, den Massenstrom des über die Pulverauslassöffnung aus der Pulverkammer abgegebenen Rohstoffpulvers stufenweise oder stufenlos zu steuern. Vorzugsweise ist die Fördereinrichtung in Form einer Förderwelle ausgebildet. Zur Verbesserung ihrer Förderwirkung kann die Förderwelle auf ihrer Oberfläche mit einer Mehrzahl von Vertiefungen versehen sein.

Die Fördereinrichtung der Pulverauftragvorrichtung kann dazu eingerichtet sein, in einer Ruhestellung, d.h. in einem nicht angetriebenen Zustand, die Pulverauslassöffnung der Pulverauftragvorrichtung zu verschließen. Im Betrieb, d.h. in einem angetriebenen Zustand, ist die Fördereinrichtung der Pulverauftragvorrichtung dagegen vorzugsweise dazu eingerichtet, Pulver aus der Pulverkammer durch die Pulverauslassöffnung auf den Träger zu fördern.

Vorzugsweise ist die Motor/Getriebeanordnung dazu eingerichtet, die Fördereinrichtung der Pulverauftragvorrichtung anzutreiben. Bei einer derartigen Konfiguration erfüllt die Motor/Getriebeanordnung die Doppelfunktion, einerseits die Pulverauftragvorrichtung relativ zu dem Träger zu bewegen und andererseits die Fördereinrichtung der Pulverauftragvorrichtung anzutreiben. Die Motor/Getriebeanordnung kann mehrere Motoren umfassen. Beispielsweise kann ein erster Motor dazu vorgesehen sein, die Pulverauftragvorrichtung relativ zu dem Träger zu bewegen. Ein zweiter Motor kann dagegen dazu dienen, die Fördereinrichtung der Pulverauftragvorrichtung anzutreiben. Falls die Motor/Getriebeanordnung mehrere Motoren umfasst, sind vorzugsweise alle Motoren außerhalb des Prozessraumgehäuses angeordnet. Vorzugsweise umfasst die Motor/Getriebeanordnung jedoch lediglich einen Motor, der sowohl dazu dient, die Pulverauftragvorrichtung relativ zu dem Träger zu bewegen als auch dazu eingesetzt wird, die Fördereinrichtung der Pulverauftragvorrichtung anzutreiben. Der Motor oder ein Motor der Motor/Getriebeanordnung kann dazu eingerichtet sein, eine in Form einer Förderwelle ausgebildete Fördereinrichtung der Pulverauftragvorrichtung in stets der gleichen Drehrichtung oder in wechselnden Drehrichtungen anzutreiben.

Im Betrieb der erfindungsgemäßen Vorrichtung kann die Motor/Getriebeanordnung von einer elektronischen Steuereinheit in Abhängigkeit der gewünschten Struktur des durch Beaufschlagen von Pulverschichten mit elektromagnetischer Strahlung oder Teilchenstrahlung, insbesondere Laserschmelzen oder Lasersintern herzustellenden Werkstücks gesteuert werden. Beispielsweise kann durch entsprechende Steuerung der Motor/Getriebeanordnung erreicht werden, dass von der Pulverauftragvorrichtung eine Rohstoffpulverschicht mit einer gewünschten Dicke auf den Träger aufgebracht wird. Zusätzlich oder alternativ dazu ist durch entsprechende Steuerung der Motor/Getriebeanordnung auch eine ortselektive Steuerung der Pulverausgabe der Pulverauftragvorrichtung auf den Träger denkbar, d.h. die Motor/Getriebeanordnung kann so gesteuert werden, dass verschiedene Bereiche des Trägers bzw. einer bereits erzeugten Werkstückschicht mit einer Schicht aus Rohstoffpulver bedeckt wird. Die von der Pulverauftragvorrichtung auf den Träger aufgebrachte Rohstoffpulverschicht wird vorzugsweise mittels eines Glättungsschiebers der Pulverauftragvorrichtung geglättet und auf eine gewünschte Höhe nivelliert.

Die Motor/Getriebeanordnung kann eine mit einer Lagervorrichtung der Pulverauftragvorrichtung gekoppelte erste Getriebeeinheit umfassen. Die erste Getriebeeinheit ist vorzugsweise dazu eingerichtet, die Antriebskraft bzw. die Antriebsbewegung des Motors der Motor/Getriebeanordnung in eine Bewegung der Lagervorrichtung der Pulverauftragvorrichtung relativ zu dem Träger umzusetzen. Zusätzlich oder alternativ dazu kann die Motor/Getriebeanordnung eine mit der Fördereinrichtung der Pulverauftragvorrichtung gekoppelte zweite Getriebeeinheit umfassen. Die zweite Getriebeeinheit ist vorzugsweise dazu eingerichtet, die Antriebskraft bzw. die Antriebsbewegung des Motors in eine Förderbewegung der Fördereinrichtung der Pulverauftragvorrichtung umzusetzen. Wenn die Fördereinrichtung der Pulverauftragvorrichtung in Form einer Förderwelle ausgebildet ist, ist die zweite Getriebeeinheit vorzugsweise dazu eingerichtet, die Antriebskraft bzw. die Antriebsbewegung des Motors der Motor/Getriebeanordnung in eine Drehbewegung der Förderwelle umzusetzen. Grundsätzlich kann die erste Getriebeeinheit mit einem ersten Motor und die zweite Getriebeeinheit mit einem zweiten Motor der Motor/Getriebeanordnung gekoppelt sein. Vorzugsweise umfasst die Motor/Getriebeanordnung jedoch lediglich einen Motor, der über eine erste Getriebeeinheit mit einer Lagervorrichtung der Pulverauftragvorrichtung und über eine zweite Getriebeeinheit mit der Fördereinrichtung der Pulverauftragvorrichtung gekoppelt ist.

Die erste Getriebeeinheit der Motor/Getriebeanordnung kann ein mit der Lagervorrichtung der Pulverauftragvorrichtung gekoppeltes erstes Antriebselement umfassen. Das erste Antriebselement ist beispielsweise in Form eines Antriebsriemens, vorzugsweise in Form eines Zahnriemens ausgebildet, um eine optimale Kraftübertragung sicherzustellen.

Die erste Getriebeeinheit kann über mindestens ein zweites Antriebselement mit dem Motor gekoppelt sein. Vorzugsweise sind jedoch zwei, im Wesentlichen parallel zueinander angeordnete zweite Antriebselemente vorgesehen, die einer Kopplung der ersten Getriebeeinheit mit dem Motor dienen. Beispielsweise kann das erste Antriebselement der ersten Getriebeeinheit über das/die zweite(n) Antriebselement(e) mit dem Motor gekoppelt sein. Ähnlich wie das erste Antriebselement kann/können auch das/die zweite(n) Antriebselemente in Form eines Antriebsriemens, insbesondere eines Zahnriemens ausgebildet sein.

Das/die zweite(n) Antriebselement(e) kann/können über ein drittes Antriebselement mit dem Motor gekoppelt sein. Vorzugsweise ist das dritte Antriebselement in einen Innenraum des Prozessraumgehäuses geführt und dort beispielsweise in einem Lagergehäuse aufgenommen. Auch das dritte Antriebselement kann in Form eines Antriebsriemens, insbesondere eines Zahnriemens ausgebildet sein.

Die zweite Getriebeeinheit der Motor/Getriebeanordnung kann eine Zahnstange sowie ein mit der Fördereinrichtung der Pulverauftragvorrichtung gekoppeltes Zahnrad umfassen. Eine derartige Konfiguration ist insbesondere dann vorteilhaft, wenn die Fördereinrichtung der Pulverauftragvorrichtung in Form einer Förderwelle ausgebildet ist und die Motor/Getriebeanordnung lediglich einen Motor umfasst, der sowohl dazu dient, die Pulverauftragvorrichtung relativ zu dem Träger zu bewegen als auch dazu eingesetzt wird, die Fördereinrichtung der Pulverauftragvorrichtung anzutreiben. Überdies zeichnet sich eine eine Zahnstange sowie ein Zahnrad umfassende zweite Getriebeeinheit durch eine geringe Fehleranfälligkeit aus und kann auch dann zuverlässig betrieben werden, wenn sie im Inneren des Prozessraumgehäuses ggf. auf starker Verschmutzung durch Rohstoffpulver und/oder erhöhten Temperaturen ausgesetzt ist.

Der Motor der Motor/Getriebeanordnung ist vorzugsweise ein elektrischer Schrittmotor.

Eine bevorzugte Ausführungsform der Erfindung wird nun anhand der beigefügten, schematischen Zeichnungen näher erläutert, von denen
- Figur 1: eine Draufsicht einer Vorrichtung zur Herstellung von Werkstücken durch Beaufschlagen von Pulverschichten mit elektromagnetischer Strahlung oder Teilchenstrahlung zeigt,
- Figur 2: eine Längsschnittansicht der Vorrichtung gemäß Figur 1 zeigt,
- Figur 3: eine weitere Längsschnittansicht der Vorrichtung gemäß Figur 1 zeigt,
- Figur 4: eine Detailschnittansicht der in der Vorrichtung gemäß Figur 3 eingesetzten Pulverauftragvorrichtung zeigt und
- Figur 5: eine weitere Detailschnittansicht der in der Vorrichtung gemäß Figur 3 eingesetzten Pulverauftragvorrichtung zeigt.

Eine in den Figuren allgemein mit 10 bezeichnete Vorrichtung zur Herstellung von Werkstücken durch Beaufschlagen von Pulverschichten mit elektromagnetischer Strahlung oder Teilchenstrahlung umfasst ein gegenüber der Umgebungsatmosphäre abgedichtetes Prozessraumgehäuse 12. Von einer in den Figuren nicht veranschaulichten Schutzgaserzeugungseinrichtung kann einem Innenraum des Prozessraumgehäuses 12 ein Schutzgas, beispielsweise Argon zugeführt werden. Durch die gegenüber der Außenatmosphäre abgedichtete Ausführung des Prozessraumgehäuses 12 kann im Innenraum des Prozessraumgehäuses 12 eine Schutzgasatmosphäre aufrecht erhalten werden.

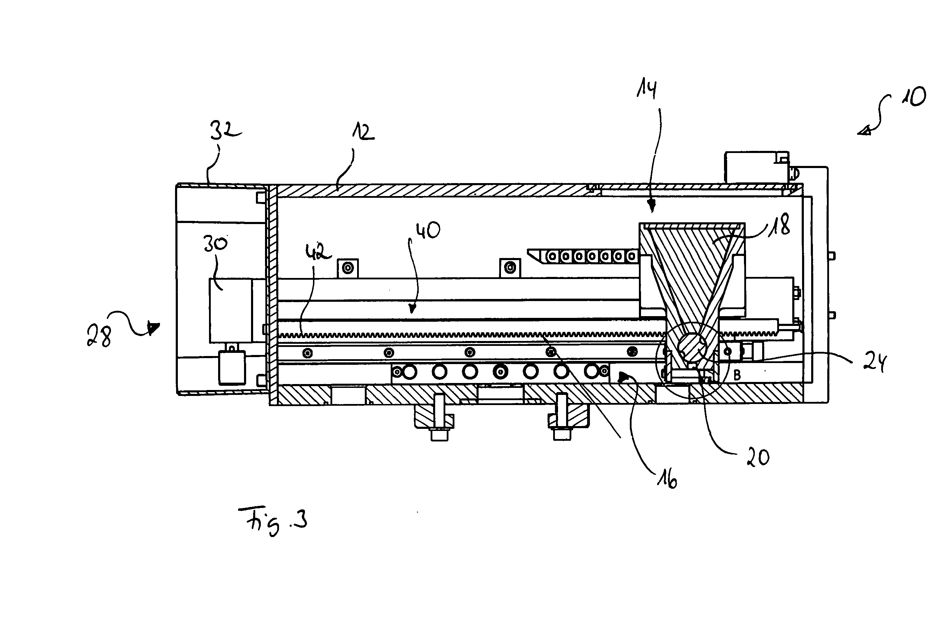

Im Inneren des Prozessraumgehäuses 12 ist eine Pulverauftragvorrichtung 14 angeordnet, die dazu dient, mit elektromagnetischer Strahlung oder Teilchenstrahlung zu beaufschlagendes Rohstoffpulver auf einen Träger 16 aufzubringen. Wie am besten in Figur 3 zu erkennen ist, umfasst die Pulverauftragvorrichtung 14 eine Pulverkammer 18 zur Aufnahme des auf den Träger 16 aufzubringenden Rohstoffpulvers sowie eine Pulverauslassöffnung 20. Der Träger 16 ist mittels einer nicht näher veranschaulichten Hubvorrichtung vertikal verschiebbar, so dass der Träger 16 mit zunehmender Bauhöhe eines schichtweise auf dem Träger 16 aufgebauten Werkstücks in vertikaler Richtung nach unten bewegt werden kann.

Darüber hinaus umfasst die Vorrichtung 10 eine in den Figuren ebenfalls nicht näher veranschaulichte Bestrahlungseinrichtung, durch die auf dem Träger 16 erzeugte Pulverschichten selektiv mit Laserstrahlung beaufschlagt werden können. Die Bestrahlungseinrichtung umfasst einen fokussierten Laser, dessen Strahl ortselektiv über die auf den Träger 16 aufgebrachte Rohstoffpulverschicht geführt werden kann. Durch den dabei in die Rohstoffpulverschicht eingebrachten Wärmeeintrag verschmelzen bzw. versintern einzelne Partikel des Rohstoffpulvers in der Rohstoffpulverschicht miteinander, wodurch ein schichtweiser Werkstückaufbau erfolgt.

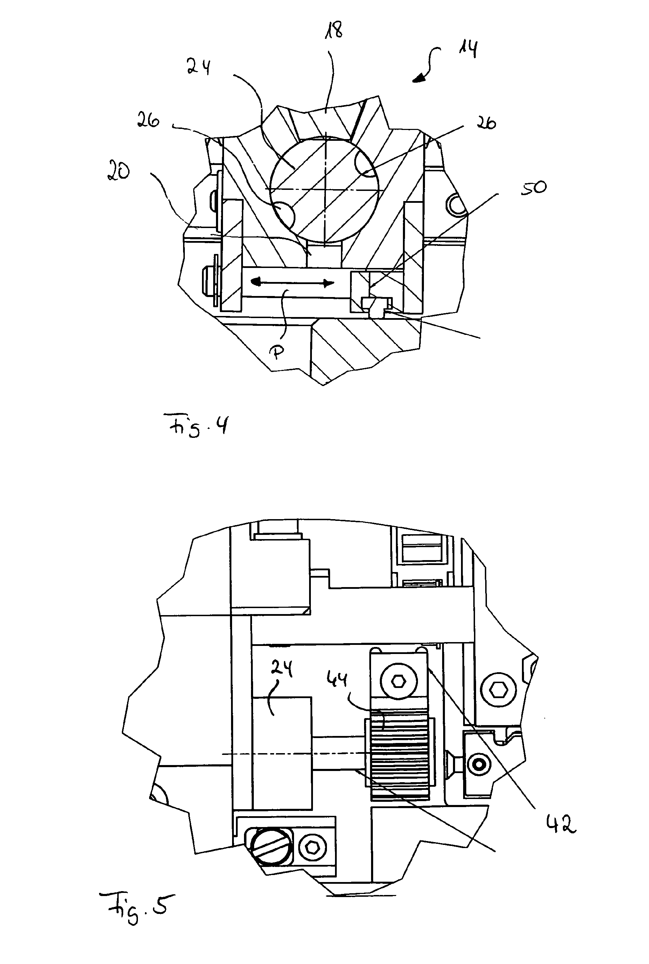

Wie am besten in den Figuren 3 und 4 zu erkennen ist, umfasst die Pulverauftragvorrichtung 14 eine in Form einer Förderwelle ausgebildete Förderrichtung 24 zur Förderung von in der Pulverkammer 18 aufgenommenem Rohstoffpulver in Richtung der Pulverauslassöffnung 20. Zur Verbesserung der Förderwirkung der Fördereinrichtung 24 ist die Fördereinrichtung 24 im Bereich ihrer Oberfläche mit einer Mehrzahl von Vertiefungen 26 versehen. Ferner ist die in Form einer Förderwelle ausgebildete Fördereinrichtung 24 in ihrer Ruhestellung, d.h. in einem nicht angetriebenen Zustand so positioniert, dass sie die Pulverauslassöffnung 20 der Pulverauftragvorrichtung 14 verschließt. Im angetriebenen Zustand fördert die Fördereinrichtung 24 dagegen Pulver aus der Pulverkammer 18 durch die Pulverauslassöffnung 20 der Pulverauftragvorrichtung 14 auf den Träger 16.

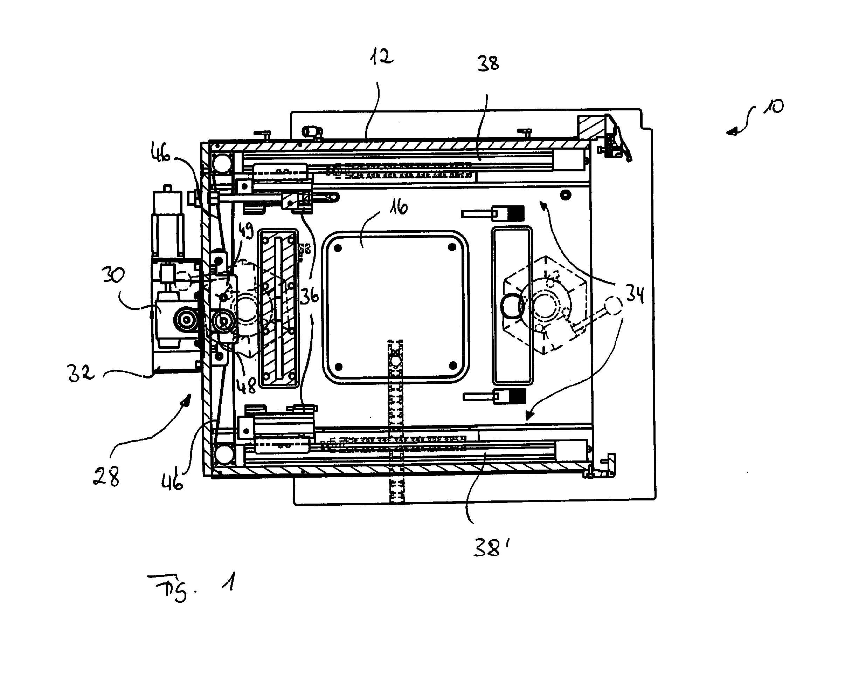

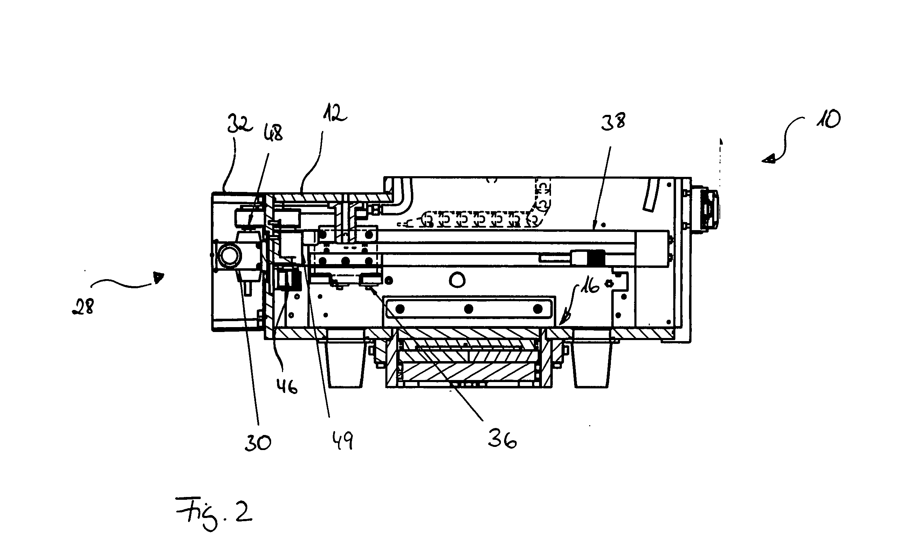

Eine Motor/Getriebeanordnung 28 der Vorrichtung 10 hat die Funktion, die Pulverauftragvorrichtung 14 parallel zu einer Pulveraufnahmeoberfläche des Trägers 16 über den Träger zu bewegen. Ferner wird die Motor/Getriebeanordnung 28 dazu genutzt, die Fördereinrichtung 24 der Pulverauftragvorrichtung 14 anzutreiben. Die Motor/Getriebeanordnung 28 umfasst einen in Form eines elektrischen Schrittmotors ausgebildeten Motor 30. Wie am besten in den Figuren 1, 2 und 3 zu erkennen ist, ist der Motor 30 außerhalb des Prozessraumgehäuses 12 in einem Motorgehäuse 32 angeordnet. Dem Motor 30 ist dadurch vor Verschmutzung durch Pulver sowie vor den im Inneren des Prozessraumgehäuses 12 vorherrschenden Temperaturen geschützt. Infolgedessen kann die Vorrichtung 10 auch mit hohen Temperaturen im Inneren des Prozessraumgehäuses 12 von >500°C betrieben werden.

Die Motor/Getriebeanordnung 28 umfasst eine erste Getriebeeinheit 34, die mit einer Lagervorrichtung 36 der Pulverauftragvorrichtung 14 gekoppelt ist, die Lagervorrichtung 36 dient der Aufnahme der Pulverauftragvorrichtung 14 und wird im Betrieb der Vorrichtung 10 gemeinsam mit der Pulverauftragvorrichtung 14 über die Träger 16 bewegt. Die erste Getriebeeinheit 34 umfasst zwei als Zahnriemen ausgebildete Antriebselemente 38, 38', die sich parallel zu Seitenwänden des Prozessraumgehäuses 12 erstrecken und im angetriebenen Zustand eine Bewegung der Lagervorrichtung 36 und folglich der in der Lagervorrichtung 36 aufgenommenen Pulverauftragvorrichtung 14 über den Träger 16 bewirken.

Ferner umfasst die Motor/Getriebeeinheit 28 eine zweite Getriebeeinheit 40, die mit der Fördereinrichtung 24 der Pulverauftragvorrichtung 14 gekoppelt ist. Die zweite Getriebeeinheit 40 umfasst eine Zahnstange 42 (siehe Figuren 3 und 5). Wie am besten in Figur 5 veranschaulicht ist, wirkt die Zahnstange 42 mit einem mit der Fördereinrichtung 24 der Pulverauftragvorrichtung 14 gekoppelten Zahnrad 44 zusammen. Durch das Zusammenwirken der Zahnstange 42 mit dem Zahnrad 44 kann die in Form einer Vorderwelle ausgebildete Fördereinrichtung 24 angetrieben, d.h. in eine Drehbewegung versetzt werden, wenn die Pulverauftragvorrichtung 14 über den Träger 16 bewegt wird.

Die ersten Antriebselemente 38, 38' der ersten Getriebeeinheit 34 sind über zwei sich im wesentlichen parallel zu einer Stirnwand des Prozessraumgehäuses 12 erstreckende zweite Antriebselemente 46, 46' mit dem Motor 30 der Motor/Getriebeanordnung 28 gekoppelt. Die Kopplung der zweiten Antriebselemente 46, 46' mit dem Motor 30 der Motor/Getriebeanordnung 28 erfolgt über ein drittes Antriebselement 48, das von dem außerhalb des Prozessraumgehäuses 12 angeordneten Motor 30 in den Innenraum des Prozessraumgehäuses 12 in ein Lagergehäuse 49 geführt ist. Das dritte Antriebselement 48 ist, ebenso wie die zweiten Antriebselemente 46, 46', in Form eines Zahnriemens ausgeführt.

Im Betrieb der Vorrichtung 10 wird die Antriebskraft bzw. die Antriebsbewegung des Motors 30 über das dritte Antriebselement 48 und die zweiten Antriebselemente 46, 46' auf das erste Antriebselement 38, 38' der ersten Getriebeeinheit 34 übertragen. Infolgedessen wird die Lagervorrichtung 36 mit der Pulverauftragvorrichtung 14 horizontal über den Träger 46 bewegt. Dabei wirkt die Zahnstange 42 mit dem Zahnrad 44 der zweiten Getriebeeinheit 40 zusammen, so dass die horizontale Bewegung der Lagervorrichtung 36 mit der Pulverauftragvorrichtung 14 unmittelbar in einer Rotationsbewegung der Fördereinrichtung 24 resultiert. Mit anderen Worten, wenn die Lagervorrichtung 36 mit der Pulverauftragvorrichtung 14 über den Träger 16 bewegt wird, wird gleichzeitig durch das Zusammenwirken der Zahnstange 42 mit dem Zahnrad 44 die Fördereinrichtung 24 der Pulverauftragvorrichtung 14 zu einer Drehbewegung angetrieben, so dass Pulver aus der Pulverkammer 18 der Pulverauftragvorrichtung 14 durch die Pulverauslassöffnung 20 auf den Träger 16 gefördert wird.

Ein Glättungsschieber 50 sorgt dabei dafür, dass die von der Pulverauftragvorrichtung 14 auf den Träger 16 aufgebrachte Rohstoffpulverschicht geglättet und auf eine gewünschte Höhe nivelliert wird. Wie am besten in Figur 4 zu erkennen ist, ist der Glättungsschieber 50 relativ zu der Pulverauslassöffnung 20 der Pulverauftragvorrichtung 14 in Richtung eines Pfeils P verschiebbar. Dadurch kann der Glättungsschieber 50, je nach Bewegungsrichtung der Lagervorrichtung 36 und der Pulverauftragvorrichtung 14, stets so positioniert werden, dass er bezogen auf die Bewegungsrichtung der Lagervorrichtung 36 und der Pulverauftragvorrichtung 14 hinter der Pulverauslassöffnung 20 positioniert ist.

## Patentansprüche

1. Vorrichtung (10) zur Herstellung von Werkstücken durch Beaufschlagen von Pulverschichten mit elektromagnetischer Strahlung oder Teilchenstrahlung, mit:
- einem Prozessraumgehäuse (12),
- einer in dem Prozessraumgehäuse (12) angeordneten Pulverauftragvorrichtung (14) zum Auftragen von mit elektromagnetischer Strahlung oder Teilchenstrahlung zu beaufschlagendem Rohstoffpulver auf einen Träger (16), die eine Pulverkammer (18) sowie eine Pulverauslassöffnung (20) umfasst,
- einer Motor/Getriebeanordnung (28), die dazu eingerichtet ist, die Pulverauftragvorrichtung (14) relativ zu dem Träger (16) zu bewegen,
**dadurch gekennzeichnet, dass** ein Motor (30) der Motor/Getriebeanordnung (28) außerhalb des Prozessraumgehäuses (12) angeordnet ist.

2. Vorrichtung nach Anspruch 1,
**dadurch gekennzeichnet, dass** die Pulverauftragvorrichtung (14) eine insbesondere in Form einer Förderwelle ausgebildete Fördereinrichtung (24) zur Förderung von in der Pulverkammer (18) aufgenommenem Rohstoffpulver in Richtung der Pulverauslassöffnung (20) umfasst.

3. Vorrichtung nach Anspruch 2,
**dadurch gekennzeichnet, dass** die Fördereinrichtung (24) der Pulverauftragvorrichtung (14) dazu eingerichtet ist, in einer Ruhestellung die Pulverauslassöffnung (20) zu verschließen und im Betrieb Pulver aus der Pulverkammer (18) durch die Pulverauslassöffnung (20) der Pulverauftragvorrichtung (14) auf den Träger (16) zu fördern.

4. Vorrichtung nach Anspruch 2 oder 3,
**dadurch gekennzeichnet, dass** die Motor/Getriebeanordnung (28) dazu eingerichtet ist, die Fördereinrichtung (24) der Pulverauftragvorrichtung (14) anzutreiben.

5. Vorrichtung nach einem der Ansprüche 1 bis 4,
**dadurch gekennzeichnet, dass** die Motor/Getriebeanordnung (28) eine mit einer Lagervorrichtung (36) der Pulverauftragvorrichtung (14) gekoppelte erste Getriebeeinheit (34) und/oder eine mit der Fördereinrichtung (24) der Pulverauftragvorrichtung (14) gekoppelte zweite Getriebeeinheit (40) umfasst.

6. Vorrichtung nach Anspruch 5,
**dadurch gekennzeichnet, dass** die erste Getriebeeinheit (34) der Motor/Getriebeanordnung (28) mindestens ein mit der Lagervorrichtung (36) der Pulverauftragvorrichtung (14) gekoppeltes erstes Antriebselement (38, 38') umfasst.

7. Vorrichtung nach Anspruch 5 oder 6,
**dadurch gekennzeichnet, dass** die erste Getriebeeinheit (34) über mindestens ein zweites Antriebselement (46, 46') mit dem Motor (30) gekoppelt ist.

8. Vorrichtung nach Anspruch 7,
**dadurch gekennzeichnet, dass** das zweite Antriebselement (46, 46') über ein drittes Antriebselement (48) mit dem Motor (30) gekoppelt ist, wobei das dritte Antriebselement (48) in einen Innenraum des Prozessraumgehäuses (12) geführt und dort in einem Lagergehäuse (49) aufgenommen ist.

9. Vorrichtung nach einem der Ansprüche 5 bis 8,
**dadurch gekennzeichnet, dass** die zweite Getriebeeinheit (40) der Motor/Getriebeanordnung (28) eine Zahnstange (42) sowie ein mit der Fördereinrichtung (24) der Pulverauftragvorrichtung (14) gekoppeltes Zahnrad (44) umfasst.

10. Vorrichtung nach einem der Ansprüche 1 bis 9,
**dadurch gekennzeichnet, dass** der Motor (30) der Motor/Getriebeanordnung (28) ein elektrischer Schrittmotor ist.

## Geänderte Patentansprüche

### Geänderte Patentansprüche gemäss Regel 137(2) EPÜ.

**1.** Vorrichtung (10) zur Herstellung von Werkstücken durch Beaufschlagen von Pulverschichten mit elektromagnetischer Strahlung oder Teilchenstrahlung, mit:
- einem gegenüber der Außenatmosphäre abgedichteten Prozessraumgehäuse (12), das dazu eingerichtet ist, im Innenraum des Prozessraumgehäuses (12) eine Schutzgasatmosphäre aufrecht zu erhalten,
- einer in dem Prozessraumgehäuse (12) angeordneten Pulverauftragvorrichtung (14) zum Auftragen von mit elektromagnetischer Strahlung oder Teilchenstrahlung zu beaufschlagendem Rohstoffpulver auf einen Träger (16), die eine Pulverkammer (18) sowie eine Pulverauslassöffnung (20) umfasst,
- einer Motor/Getriebeanordnung (28), die dazu eingerichtet ist, die Pulverauftragvorrichtung (14) relativ zu dem Träger (16) zu bewegen,
**dadurch gekennzeichnet, dass** ein Motor (30) der Motor/Getriebeanordnung (28) außerhalb des gegenüber der Außenatmosphäre abgedichteten Prozessraumgehäuses (12) angeordnet ist.

**2.** Vorrichtung nach Anspruch 1,
**dadurch gekennzeichnet, dass** die Pulverauftragvorrichtung (14) eine insbesondere in Form einer Förderwelle ausgebildete Fördereinrichtung (24) zur Förderung von in der Pulverkammer (18) aufgenommenem Rohstoffpulver in Richtung der Pulverauslassöffnung (20) umfasst.

**3.** Vorrichtung nach Anspruch 2,
**dadurch gekennzeichnet, dass** die Fördereinrichtung (24) der Pulverauftragvorrichtung (14) dazu eingerichtet ist, in einer Ruhestellung die Pulverauslassöffnung (20) zu verschließen und im Betrieb Pulver aus der Pulverkammer (18) durch die Pulverauslassöffnung (20) der Pulverauftragvorrichtung (14) auf den Träger (16) zu fördern.

**4.** Vorrichtung nach Anspruch 2 oder 3,
**dadurch gekennzeichnet, dass** die Motor/Getriebeanordnung (28) dazu eingerichtet ist, die Fördereinrichtung (24) der Pulverauftragvorrichtung (14) anzutreiben.

**5.** Vorrichtung nach einem der Ansprüche 1 bis 4,
**dadurch gekennzeichnet, dass** die Motor/Getriebeanordnung (28) eine mit einer Lagervorrichtung (36) der Pulverauftragvorrichtung (14) gekoppelte erste Getriebeeinheit (34) und/oder eine mit der Fördereinrichtung (24) der Pulverauftragvorrichtung (14) gekoppelte zweite Getriebeeinheit (40) umfasst.

**6.** Vorrichtung nach Anspruch 5,
**dadurch gekennzeichnet, dass** die erste Getriebeeinheit (34) der Motor/Getriebeanordnung (28) mindestens ein mit der Lagervorrichtung (36) der Pulverauftragvorrichtung (14) gekoppeltes erstes Antriebselement (38, 38') umfasst.

**7.** Vorrichtung nach Anspruch 5 oder 6,
**dadurch gekennzeichnet, dass** die erste Getriebeeinheit (34) über mindestens ein zweites Antriebselement (46, 46') mit dem Motor (30) gekoppelt ist.

**8.** Vorrichtung nach Anspruch 7,
**dadurch gekennzeichnet, dass** das zweite Antriebselement (46, 46') über ein drittes Antriebselement (48) mit dem Motor (30) gekoppelt ist, wobei das dritte Antriebselement (48) in einen Innenraum des Prozessraumgehäuses (12) geführt und dort in einem Lagergehäuse (49) aufgenommen ist.

**9.** Vorrichtung nach einem der Ansprüche 5 bis 8,
**dadurch gekennzeichnet, dass** die zweite Getriebeeinheit (40) der Motor/Getriebeanordnung (28) eine Zahnstange (42) sowie ein mit der Fördereinrichtung (24) der Pulverauftragvorrichtung (14) gekoppeltes Zahnrad (44) umfasst.

**10.** Vorrichtung nach einem der Ansprüche 1 bis 9,
**dadurch gekennzeichnet, dass** der Motor (30) der Motor/Getriebeanordnung (28) ein elektrischer Schrittmotor ist.
